# EUROPÄISCHE PATENTSCHRIFT

(11) **EP 2 577 034 B1**
(45) Veröffentlichungstag und Bekanntmachung des Hinweises auf die Patenterteilung: **03.12.2014**
(21) Anmeldenummer: 11724171.1
(22) Anmeldetag: 01.06.2011
(51) Int. Cl.: F02M 25/07, F16K 31/04, F16K 31/524, F16K 31/53

(54) **STELLANTRIEB, ABGASRÜCKFÜHRVENTIL, ABGASTURBOLADER**
VALVE ACTUATOR, EGR VALVE, TURBOCHARGER
ACTIONNEUR DE SOUPAPE, SOUPAPE DE RECIRCULATION DE GAZ D'ÉCHAPPEMENT, TURBOCOMPRESSEUR

(30) Priorität: 04.06.2010 DE 102010022736
(43) Veröffentlichungstag der Anmeldung: 10.04.2013
(73) Patentinhaber: Mahle International GmbH, 70376 Stuttgart (DE)
(72) Erfinder: EGGLER, Jochen, 70469 Stuttgart (DE); KISSNER, Gerd, 70567 Stuttgart (DE); CICCIARELLA, Maximiliano, 71254 Ditzingen (DE); RAGOGNA, Robert, 9500 Villach (AT); SCHADLER, Werner, 8430 Seggauberg (AT)
(74) Vertreter: BRP Renaud & Partner mbB Rechtsanwälte Patentanwälte Steuerberater
(86) Internationale Anmeldenummer: PCT/EP2011/059045
(87) Internationale Veröffentlichungsnummer: WO 2011/151375

(56) Entgegenhaltungen:
- EP-A2- 1 028 249
- DE-A1-102007 054 769
- US-B1- 6 886 546

## Beschreibung

Die vorliegende Erfindung betrifft einen Stellantrieb für ein bidirektional verstellbares Stellglied, insbesondere für eine Abgasrückführeinrichtung oder für einen Abgasturbolader, mit den Merkmalen des Oberbegriffs des Anspruchs 1. Die Erfindung betrifft außerdem ein mit einem derartigen Stellantrieb ausgestattetes Abgasrückführventil sowie einen mit einem derartigen Stellantrieb ausgestatteten Abgasturbolader.

Aus der DE 10 2007 054 769 A1 ist ein derartiger Stellantrieb bekannt. Er umfasst einen als Elektromotor ausgestalteten Aktuator zum Erzeugen von Antriebskräften sowie einen Kniehebel, der über ein erstes Kniehebelgelenk mit dem Stellglied gelenkig verbunden ist. Ferner ist eine Kraftübertragungsanordnung vorgesehen, die den Aktuator mit dem Kniehebel zur Kraftübertragung verbindet. Ein ausgangsseitiges Ausgangselement dieser Kraftübertragungsanordnung ist an einem Trägergehäuseabschnitt des Stellantriebs schwenkbar gelagert, während der Kniehebel über ein zweites Kniehebelgelenk mit dem Ausgangselement gelenkig verbunden ist.

Beim bekannten Stellantrieb ist das Ausgangselement durch ein segmentartiges Verzahnungselement gebildet, das um eine Schwenkachse verschwenkbar ist. Beim Verschwenken des Verzahnungselementes wird das zweite Kniehebelgelenk aus einem Bereich herausbewegt, der zur Bewegungsrichtung des Stellglieds fluchtet. Hierdurch verschwenkt der Kniehebel und treibt das Stellglied an.

Es hat sich nun gezeigt, dass die Auslenkung des Kniehebels im Bereich des zweiten Kniehebelgelenks aus der Bewegungsrichtung des Stellglieds heraus zu Querkräften im Kniehebel führt, die dieser über das erste Kniehebelgelenk an das Stellglied überträgt. Somit kommt es im Stellglied zu einer Querkraftbelastung, die zu einem erhöhten Verschleiß führt.

Erhöhter Verschleiß bei Querkraftbelastung tritt auch bei anderen Stellantrieben auf, wie sie z.B. aus US 6,886,546 B1 und EP 1 028 249 A2 bekannt sind.

Die vorliegende Erfindung beschäftigt sich mit dem Problem, für einen Stellantrieb der eingangs genannten Art eine verbesserte Ausführungsform anzugeben, die sich insbesondere durch eine hohe Lebensdauer auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Querabstützung zwischen dem Kniehebel bzw. dem Stellglied und einem Führungsgehäuseabschnitt zu realisieren. Diese Querabstützung kann Querkräfte, die in einer quer zur Bewegungsrichtung des Stellglieds orientierten Abstützrichtung verlaufen, aufnehmen, sodass letztlich im Stellglied die störenden Querkräfte signifikant reduziert sind. Die vorgeschlagene Querkraftabstützung führt zu einer Querkraftentkopplung des Stellglieds, da die vom Kniehebel auf das erste Kniegelenk eingeleiteten Querkräfte weitgehend oder vollständig vom Führungsgehäuseabschnitt aufgenommen werden. Der Führungsgehäuseabschnitt bildet einen Bestandteil des Stellantriebs bzw. eines Gehäuses des Stellantriebs.

Entsprechend einer bevorzugten Ausführungsform kann die Querabstützung im Bereich des ersten Kniehebelgelenks angeordnet sein. Die Anordnung dieser Querabstützung im Bereich des ersten Kniehebelgelenks erfolgt gezielt am Ort der Querkraftübertragung zwischen Kniehebel und Stellglied und wirkt dadurch besonders effektiv.

Gemäß einer vorteilhaften Ausführungsform können Gelenkachsen der beiden Kniehebelgelenke und eine Schwenkachse des Ausgangselementes parallel zueinander und senkrecht zur linearen Bewegungsrichtung des Stellglieds verlaufen, wobei die Abstützrichtung senkrecht zur Bewegungsrichtung und senkrecht zu den Gelenkachsen verläuft. Durch diese Bauweise ergibt sich für die vom Kniehebel auf das erste Kniehebelgelenk eingeleiteten Querkräfte eine definierte Wirkrichtung, wodurch die vorgeschlagene Abstützung vereinfacht ist.

Der Führungsgehäuseabschnitt kann bei einer anderen Ausführungsform zumindest an einer Seite eines Verstellbereiches des ersten Kniehebelgelenks zwei parallel zur Bewegungsrichtung des Stellglieds verlaufende Führungsbahnabschnitte aufweisen, die voneinander einen Abstand aufweisen und an denen ein Führungskörper abgleitet oder abrollt, der bzgl. des ersten Kniehebelgelenks ortsfest angeordnet ist. Mit Hilfe dieser Führungsbahnabschnitte wird einerseits die gewünschte Querabstützung realisiert werden, während gleichzeitig für das erste Kniehebelgelenk eine Längsführung parallel zur Bewegungsrichtung des Stellglieds realisiert wird.

Bei einer speziellen Weiterbildung kann der jeweilige Führungskörper als Rolle oder als Wälzlager ausgestaltet sein, sodass er an wenigstens einem Führungsbahnabschnitt abrollt. Hierdurch ergibt sich eine reibungsreduzierte Axialführung des Stellglieds und/oder des Kniehebels im Bereich des ersten Kniehebelgelenks. Das jeweilige Wälzlager kann zweckmäßig einen mit dem ersten Kniehebelgelenk verbundenen Innenring, einen an zumindest einem Führungsbahnabschnitt abrollenden Außenring und zwischen Innenring und Außenring angeordnete Wälzkörper, z. B. Kugeln oder Walzen, aufweisen. Derartige Wälzlager lassen sich quasi spielfrei realisieren, sodass eine besonders reibungsarme Axialführung realisierbar ist.

Vorteilhaft ist dabei eine Ausführungsform, bei welcher der Abstand zwischen den beiden parallelen Führungsbahnabschnitten größer ist als ein Außendurchmesser des Führungskörpers, insbesondere als ein Außendurchmesser der Rolle oder des Wälzlagers, vorzugsweise des Außenrings. Hierdurch wird sichergestellt, dass der Führungskörper stets nur mit einem der zwei Führungsbahnabschnitte in Kontakt steht, was die Reibung reduziert. Sofern der Führungskörper als Wälzlager oder Rolle ausgestaltet ist, wird ein Abrollen an dem einen Führungsbahnabschnitt gewährleistet, während am anderen Führungsbahnabschnitt ein Freilauf realisiert ist.

Besonders vorteilhaft ist eine Ausgestaltungsform, bei der sich der jeweilige Führungskörper bei einer Druckkraftübertragung zwischen Kniehebel und Stellglied entlang des einen Führungsbahnabschnitts abstützt und bei einer Zugkraftübertragung zwischen Kniehebel und Stellglied entlang des anderen Führungsbahnabschnitts abstützt. Somit können die bei den beiden Hubrichtungen des Stellglieds auftretenden, entgegengesetzt orientierten Querkräfte an separaten, einander gegenüberliegenden Führungsbahnabschnitten abgestützt werden.

Zweckmäßig können die beiden Führungsbahnabschnitte über einen Verbindungsbahnabschnitt zu einer zusammenhängenden, U-förmigen Führungsbahn miteinander verbunden sein. Insbesondere kann der Verbindungsbahnabschnitt dabei so ausgestaltet sein, dass der Führungskörper in einem Wendepunkt oder Totpunkt der Verstellbewegung des Stellglieds beim Übergang zwischen Druckkraftübertragung und Zugkraftübertragung entlang des Verbindungsbahnabschnitts abgleitet oder abrollt und hinsichtlich der Abstützung von dem einen Führungsbahnabschnitt zum anderen Führungsbahnabschnitt wechselt. Durch diese Bauweise bleibt der jeweilige Führungskörper stets in Kontakt mit dem Führungsgehäuseabschnitt, nämlich abwechselnd und ineinander übergehend an dem einen Führungsbahnabschnitt, am Verbindungsbahnabschnitt und am anderen Führungsbahnabschnitt. Durch die permanente Kontaktierung des jeweiligen Führungskörpers mit dem Führungsgehäuseabschnitt, kann eine Geräuschentwicklung sowie eine Beschädigungsgefahr reduziert werden, die erhöht ist, wenn der jeweilige Führungskörper gegen eine Führungskontur anschlägt. Es ist klar, dass auch kürzere Hubbewegungen durchführbar sind, die nicht bis um Totpunkt der Kinematik reichen und dennoch einen Wendepunkt der Bewegung repräsentieren können.

Besonders vorteilhaft ist es, wenn an zwei diametral gegenüberliegenden Seiten des Verstellbereiches des ersten Kniehebelgelenks je zwei derartige Führungsbahnabschnitte und je ein solcher Führungskörper vorgesehen sind. Hierdurch ergibt sich eine symmetrische Abstützung für das Stellglied, die bzgl. einer Längsmittelachse des Stellglieds außerdem momentenfrei ist.

Das Stellglied kann im Bereich des ersten Kniehebelgelenks mit einem Teller fest verbunden sein, wodurch es besonders einfach möglich ist, im Bereich des ersten Kniehebelgelenks Kräfte auf des Stellglied zu übertragen.

Ferner kann gemäß einer vorteilhaften Weiterbildung eine Rückstellfeder vorgesehen sein, die einerseits am Teller und andererseits am Führungsgehäuseabschnitt abgestützt ist und die das Stellglied in eine Ausgangsstellung antreibt. Durch diese Maßnahme wird im Bereich der Querabstützung eine zusätzliche Funktionalität in den Stellantrieb integriert. Dadurch baut der Stellantrieb vergleichsweise kompakt.

Besonders vorteilhaft ist eine Weiterbildung, bei welcher der Teller integral an einem Stellgliedkopf ausgeformt ist, an dem eine Stellgliedstange befestigt ist. Das Stellglied besteht somit aus wenigstens zwei Bauteilen, die aneinander befestigt werden, um das Stellglied zusammenzubauen. Zusätzlich oder alternativ kann vorgesehen sein, den Teller ringförmig auszugestalten und über zwei diametral gegenüberliegende Stege mit dem Stellglied oder mit einem Stellgliedkopf des Stellglieds zu verbinden. Diese Stege können dabei am Führungsgehäuseabschnitt in je einem Führungsspalt seitlich geführt sein. Hierdurch ergibt sich eine zusätzliche Querabstützung des Stellglieds im Bereich des ersten Kniehebelgelenks.

Das erste Kniehebelgelenk kann entsprechend einer vorteilhaften Ausgestaltung am Stellgliedkopf ausgebildet sein. Zusätzlich oder alternativ können die Stege die Führungsspalte durchgreifen, sodass das erste Kniehebelgelenk innen am Führungsgehäuseabschnitt angeordnet ist, während die Rückstellfeder außen am Führungsgehäuseabschnitt angeordnet ist. Zusätzlich oder alternativ können die Stege parallel zur Abstützrichtung orientiert sein. Zusätzlich oder alternativ kann der jeweilige Führungskörper bzw. können die beiden, diametral gegenüberliegenden Führungskörper an einer Gelenkwelle des ersten Kniehebelgelenks angeordnet sein. Die vorstehend genannten Maßnahmen können alternativ oder kumulativ oder in beliebiger Kombination realisiert werden, um den Aufbau des Stellantriebs zu vereinfachen.

Bei der Kraftübertragungsanordnung kann es sich rein exemplarisch um ein Zahngetriebe handeln. Zweckmäßig ist das Ausgangselement dann ein Verzahnungselement, insbesondere ein Zahnradsegment, das sich ohne Beschränkung der Allgemeinheit bspw. über etwa 90° oder mehr oder weniger erstreckt. Der Führungsgehäuseabschnitt und der Trägergehäuseabschnitt können insbesondere an einem Stellantriebsgehäuse integral ausgeformt sein.

Bei einer andere Ausführungsform kann die Querabstützung zumindest zwei bezüglich der Bewegungsrichtung in Umfangsrichtung verteilt angeordnete Führungsstifte aufweisen, die den Teller und somit das Stellglied parallel zur Bewegungsrichtung geführt am Führungsgehäuseabschnitt abstützen. Mit Hilfe der Führungsstifte lässt sich eine besonders zuverlässige Axialführung parallel zur Bewegungsrichtung realisieren.

Gemäß einer Weiterbildung kann der jeweilige Führungsstift in einer Führungsbuchse parallel zur Bewegungsrichtung geführt verstellbar ist, die am Teller angeordnet sein, was die Führung verbessert.

Zusätzlich oder alternativ kann vorgesehen sein, dass der jeweilige Führungsstift am Führungsgehäuseabschnitt in einer Stiftöffnung gehalten und/oder geführt verstellbar ist. Auch dies ermöglicht eine zuverlässige und einfach aufgebaute Führung.

Entsprechend einer weiteren besonderen Ausführungsform kann die Querabstützung wenigstens ein Wälzkörperlager oder ein Rollenlager aufweisen, das am Führungsgehäuseabschnitt angeordnet ist und sich am Stellglied abstützt. Hierdurch wird das Stellglied unmittelbar seitlich geführt. Das jeweilige Lager zeichnet sich dabei durch einen extrem niedrigen Reibungsbeiwert aus, so dass die Leichtgängigkeit des Stellglieds und des Stellantriebs nicht beeinträchtigt ist.

Gemäß einer vorteilhaften Weiterbildung können mehrere Wälzkörperlager oder Rollenlager bezüglich der Bewegungsrichtung in Umfangsrichtung verteilt angeordnet sein, was eine allseitige stabile Seitenabstützung und Führung bewirkt.

Bei einer anderen Weiterbildung kann das jeweilige Wälzkörperlager oder das jeweilige Rollenlager eine Rotationsachse aufweisen, um welche Wälzkörper des Wälzkörperlagers rotieren oder eine Rolle des Rollenlagers rotiert und die quer zur Bewegungsrichtung orientiert ist. Hierdurch wird die Führungswirkung und Abstützwirkung nochmals verbessert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht eines Stellantriebs,
- Fig. 2: eine Schnittansicht des Stellantriebs im Bereich eines Kniehebels entsprechend Schnittlinien II in Fig. 3,
- Fig. 3: eine Schnittansicht wie in Fig. 2, jedoch in einer anderen Schnittebene entsprechend Schnittlinien III in Fig. 2,
- Fig. 4: eine isometrische Ansicht des Stellantriebs, bei einer anderen Ausführungsform,
- Fig. 5: eine vergrößerte Detailansicht des Stellantriebs aus Fig. 4 im Bereich einer Querabstützung,
- Fig. 6: ein vereinfachter Längsschnitt durch den Stellantrieb, bei einer weiteren Ausführungsform.

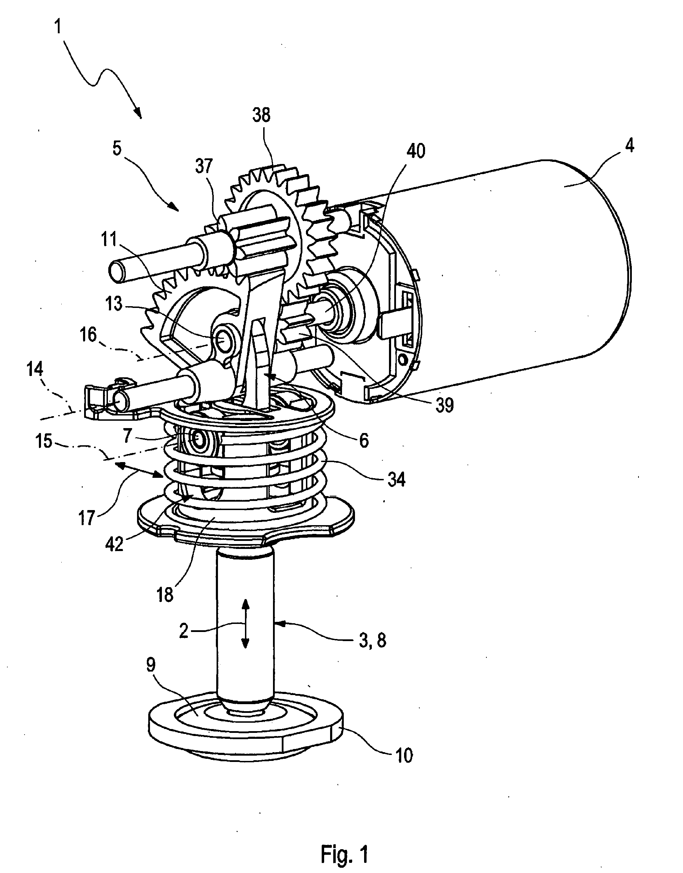

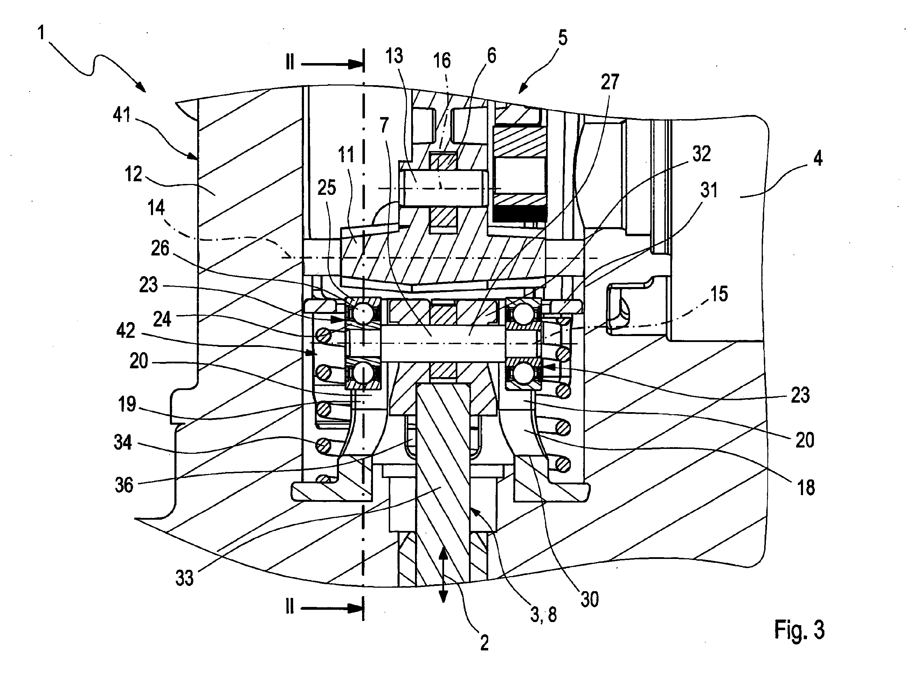

Entsprechend den Figuren 1 bis 6 umfasst ein Stellantrieb 1, mit dessen Hilfe ein entsprechend einem Doppelpfeil 2 bidirektional verstellbares Stellglied 3 antreibbar ist, einen Aktuator 4 zum Erzeugen von Antriebskräften, eine Kraftübertragungsanordnung 5 und einen Kniehebel 6. Beim Aktuator 4 handelt es sich bspw. um einen Elektromotor. Bei der Kraftübertragungsanordnung 5 handelt es sich im Beispiel um ein Zahnradgetriebe. Der Kniehebel 6 ist über ein erstes Kniehebellager 7 mit dem Stellglied 3 gelenkig verbunden. Bei der in den Fig. 1 bis 3 gezeigten Ausführungsform handelt es sich beim Stellglied 3 exemplarisch um ein Ventilglied 8, das einen Ventilkörper 9 aufweist und diesen relativ zu einem Ventilsitz 10 verstellt. Bspw. kann der Stellantrieb 1 in einem Abgasrückführventil für eine Abgasrückführeinrichtung einer Brennkraftmaschine, insbesondere in einem Kraftfahrzeug, verwendet werden. Das Ventilglied 8 ist dann zum Steuern eines durchströmbaren Querschnitts angetrieben, um über den Hub des Ventilglieds 9 eine Abgasrückführrate der Abgasrückführeinrichtung einzustellen. Alternativ ist es ebenso möglich, einen Abgasturbolader mit diesem Stellantrieb 1 auszustatten, bspw. um ein Ventilglied eines Wastegate-Ventils zu betätigen, mit dem ein eine Hochdruckseite mit einer Niederdruckseite der Turbine des Abgasturboladers verbindender Bypass gesteuert werden kann. Ferner ist es bei einer anderen Abgasturboladeranwendung möglich, mit Hilfe des Stellantriebs 1 eine variable Turbinengeometrie zu betätigen, die verstellbare Leitschaufeln zum Steuern eines Einlassquerschnitts zu einem Turbinenrad der Turbine des Abgasturboladers aufweist.

Die Kraftübertragungsanordnung 5 verbindet den Aktuator 4 mit dem Kniehebel 6 zur Kraftübertragung. Hierzu weist die Kraftübertragungsanordnung 5 ein ausgangsseitig angeordnetes Ausgangselement 11 auf, das an einem Trägergehäuseabschnitt 12 des Stellantriebs 1 schwenkbar gelagert ist. An diesem Ausgangselement 11 ist der Kniehebel 6 über ein zweites Kniehebelgelenk 13 gelenkig verbunden. Eine Schwenkverstellung des Ausgangselementes 11 wird über die gewählte Positionierung einer Schwenkachse 14 des Ausgangselementes 11 relativ zu Gelenkachsen 15,16 der Kniehebelgelenke 7,13 vom Kniehebel 6 in eine Hubbewegung des Stellglieds 3 übersetzt bzw. umgewandelt.

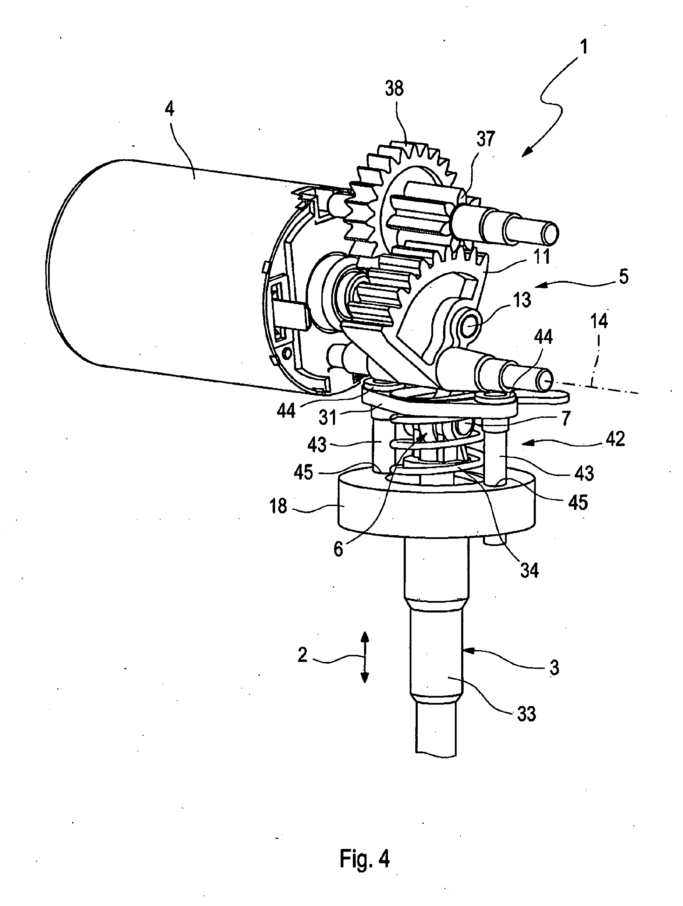

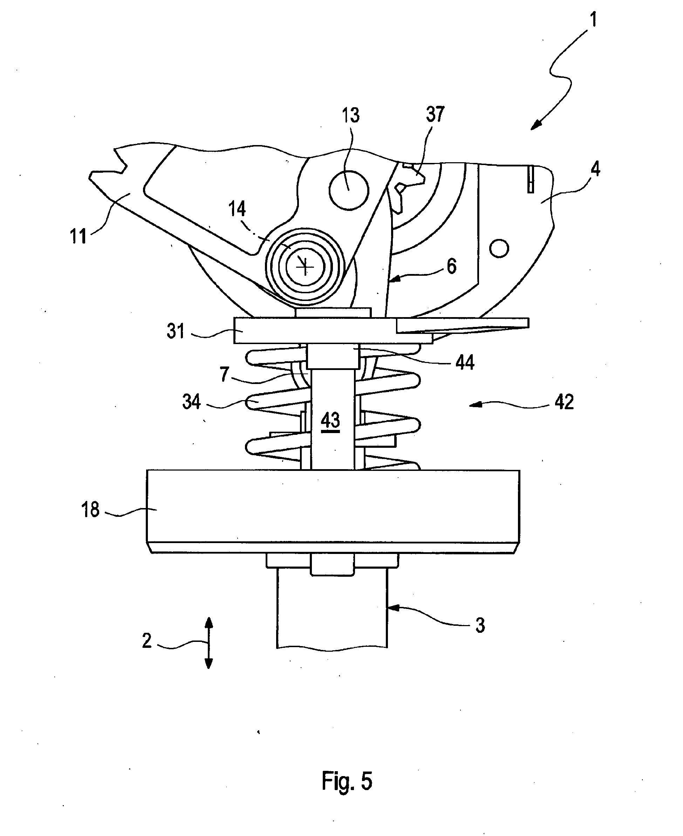

Der Kniehebel 6 bzw. das Stellglied 3 ist mit Hilfe einer Querabstützung 42 in einer durch einen Doppelpfeil angedeuteten Abstützrichtung 17 an einem Führungsgehäuseabschnitt 18 des Stellantriebs 1 abgestützt. Die Abstützrichtung 17 ist dabei quer zur Bewegungsrichtung 2 des Stellglieds 3 orientiert. Hierdurch können vom Kniehebel 3 in das erste Kniehebelgelenk 7 eingeleitete, quer zur Bewegungsrichtung 2 orientierte Querkräfte am Führungsgehäuseabschnitt 18 abgestützt werden. Insoweit ist dann das Stellglied 3 von diesen Querkräften entkoppelt. Im Beispiel der Fig. 1 bis 3 sowie im Beispiel der Fig. 4 und 5 ist diese Querabstützung 42 im Bereich des ersten Kniehebelgelenks 7 vorgesehen.

Zweckmäßig verlaufen die beiden Gelenkachsen 15,16 der beiden Kniehebelgelenke 7,13 parallel zur Schwenkachse 14 des Ausgangselementes 11. Darüber hinaus verlaufen diese Gelenkachsen 15,16 und die Schwenkachse 14 senkrecht zur linearen Bewegungsrichtung 2 des Stellglieds 3. Die Abstützrichtung 17 ist nun senkrecht zur Bewegungsrichtung 2 und senkrecht zu den Gelenkachsen 15,16 bzw. senkrecht zur Schwenkachse 14 ausgerichtet.

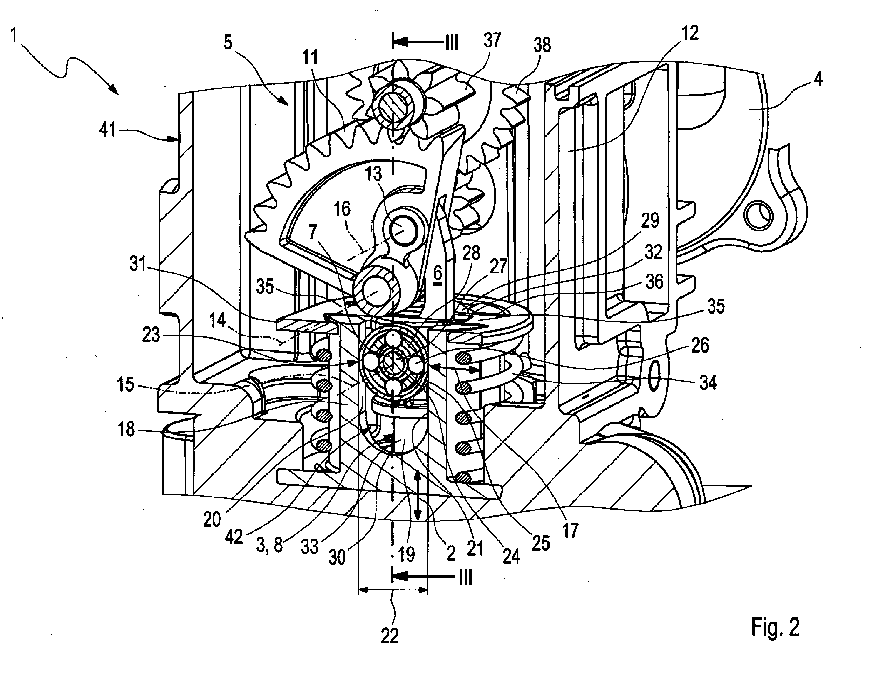

Wie Fig. 2 besonders deutlich entnehmbar ist, weist der Führungsgehäuseabschnitt 18 bei der in den Fig. 1 bis 3 gezeigten Ausführungsform zumindest an einer Seite eines Verstellbereiches 19 des ersten Kniehebelgelenks 7 zwei parallel zur Bewegungsrichtung 2 des Stellglieds 3 verlaufende Führungsbahnabschnitte 20,21 auf. Die beiden Führungsbahnabschnitte 20,21 weisen voneinander einen Abstand 22 auf. An diesen Führungsbahnabschnitten 20,21 kann ein Führungskörper 23 abgleiten oder abrollen. Dieser Führungskörper 23 ist dabei bzgl. des ersten Kniehebelgelenks 7 ortsfest angeordnet. Im hier gezeigten Beispiel ist an zwei einander diametral gegenüberliegenden Seiten des Verstellbereichs 19 jeweils ein derartiger Führungskörper 23 ortsfest zum ersten Kniehebelgelenk 7 angeordnet, dem ebenfalls zwei einander gegenüberliegende, zueinander parallel verlaufende Führungsbahnabschnitte 20,21 zugeordnet sind. Grundsätzlich sind die beiden Führungskörper-Führungsbahnabschnitt-Paarungen spiegelsymmetrisch ausgestaltet.

Bei der hier gezeigten, bevorzugten Ausführungsform ist der jeweilige Führungskörper 23 als Wälzlager ausgestaltet. Alternativ kann es sich beim Führungskörper 23 auch um eine Rolle handeln. Wälzlager oder Rolle rollen an zumindest einem Führungsbahnabschnitt 20,21 ab.

Sofern der Führungskörper 23 als Wälzlager ausgestaltet ist, besitzt dieses einen Innenring 24, einen Außenring 25 sowie mehrere Wälzkörper 26. Der Innenring 24 ist drehfest mit dem ersten Kniehebelgelenk 7 bzw. mit einer ersten Gelenkwelle 27 des ersten Kniehebelgelenks 7 verbunden. Der Außenring 25 rollt an zumindest einem der Führungsbahnabschnitte 20,21 ab. Die Wälzkörper 26, hier Kugeln, sind zwischen Innenring 24 und Außenring 25 angeordnet und ermöglichen ein spielfreies Abrollen des Außenrings 25 am Innenring 24. Die Wälzkörper 26 können außerdem durch einen Käfig 28 relativ zueinander positioniert sein.

Der zwischen den Führungsbahnabschnitten 20,21 vorgesehene Abstand 22 ist größer als ein Außendurchmesser 29 des Führungskörpers 23 bzw. des Wälzlagers bzw. des Außenrings 25. Hierdurch ist sichergestellt, dass der Führungskörper 23 stets nur mit einem der beiden Führungsbahnabschnitte 20,21 in Kontakt steht.

Der jeweilige Führungskörper 23 rollt sich aufgrund der hier vorliegenden Kinematik zwischen Ausgangselement 11 und Kniehebel 6 bei einer Druckkraftübertragung zwischen Kniehebel 6 und Stellglied 3 entlang des einen Führungsbahnabschnitts 20 ab, der in Fig. 2 links angeordnet ist. Bei einer Zugkraftübertragung zwischen Kniehebel 6 und Stellglied 3 stützt sich der jeweilige Führungskörper 23 entlang des anderen, in Fig. 2 rechts dargestellten Führungsbahnabschnittes 21 ab. Bei der hier gezeigten Ausführungsform sind die beiden Führungsbahnabschnitte 20,21 über einen Verbindungsbahnabschnitt 30 miteinander verbunden, wodurch sich eine zusammenhängende Führungsbahn ergibt, die gemäß der in Fig. 2 erkennbaren Schnittansicht im Wesentlichen U-förmig ist. Zweckmäßig kann nun der jeweilige Führungskörper 23 in einem Wendepunkt oder Totpunkt der Verstellbewegung des Stellglieds 3 beim Übergang zwischen der Druckkraftübertragung und der Zugkraftübertragung entlang dieses Verbindungsbahnabschnitts 30 abgleiten oder abrollen. Folglich wechselt der Führungskörper 23 in diesen Wendepunkt oder Totpunkt von dem einen Führungsbahnabschnitt 20 zum anderen Führungsbahnabschnitt 21.

Wie bereits vorstehend erläutert, weist das erste Kniehebelgelenk 7 eine erste Gelenkwelle 27 oder Kniegelenkwelle 27 auf. Über diese erste Kniegelenkwelle 27 ist der Kniehebel 6 im ersten Kniehebelgelenk 7 mit dem Stellglied 3 gelenkig verbunden. Zweckmäßig steht diese erste Gelenkwelle 27 zumindest an einer Seite über das Stellglied 3 über und trägt den jeweiligen Führungskörper 23, zweckmäßig den Innenring 24.

Das Stellglied 3 ist im Bereich des ersten Kniehebellagers 7 außerdem mit einem Teller 31 ausgestattet. Insbesondere kann dieser Teller 31 integral an einem Steligliedkopf 32 ausgeformt sein, der auf geeignete Weise, z.B. durch Verschraubung oder durch Verpressung oder mittels einer Schweißverbindung oder dergleichen, mit einer Stellgliedstange 33 verbunden ist. Das erste Kniehebelgelenk 7 ist am Stellgliedkopf 32 ausgebildet, wodurch sich im Bereich des ersten Kniehebelgelenks 7 eine besonders hohe Funktionsdichte ergibt.

Ferner ist eine Rückstellfeder 34 vorgesehen, die sich einerseits am Teller 31 und andererseits am Führungsgehäuseabschnitt 18 abstützt. Die Rückstellfeder 34 treibt das Stellglied 3 in der Bewegungsrichtung 2 in eine Ausgangsstellung des Stellglieds 3 an. Die Rückstellfeder 34 nimmt dadurch jegliches Spiel aus der Kraftübertragungsanordnung 5 heraus. Bspw. ist die Rückstellfeder 34 als Druckfeder ausgestaltet, die über den Teller 31 das Stellglied 3 in die angehobene oder obere Ausgangsstellung oder obere Totpunktlage antreibt.

Der Teller 31 ist hier ringförmig ausgestaltet und über zwei diametral gegenüberliegende Stege 35 mit dem Stellglied 3 bzw. mit dem Stellgliedkopf 32 verbunden. Insbesondere bilden Teller 31, Stege 35 und Stellgliedkopf 32 eine integral aus einem Stück hergestellte Einheit. Die Stege 35 sind am Führungsgehäuseabschnitt 18 jeweils in einem Führungsspalt 36 seitlich geführt. Insbesondere bildet der Führungsgehäuseabschnitt 18 somit eine Art Käfig, der einerseits zwei diametral gegenüberliegende Führungsbahnabschnitt-Paare 20,21 und andererseits um 90° versetzt dazu, zwei einander diametral gegenüberliegende Führungsspalte 36 aufweist.

Die Stege 35 durchgreifen die zugehörigen Führungsspalte 36. In der Folge ist das erste Kniehebelgelenk 7 innen im Führungsgehäuseabschnitt 18 angeordnet, während die Rückstellfeder 34 außen am Führungsgehäuseabschnitt 18 angeordnet ist. Ferner sind die Stege 35 hier parallel zur Abstützrichtung 17 orientiert.

Das Ausgangselement 11 ist hier als Verzahnungselement bzw. als Zahnradsegment ausgestaltet, das sich bspw. bogenförmig über etwa 90° erstreckt. Das Ausgangselement 11 kämmt mit einem kleinen Zahnrad 37, das drehfest mit einem großen Zahnrad 38 verbunden ist. Die Begriffe "klein" und "groß" beziehen sich hierbei auf die Durchmesser und Zähnezahl der Zahnräder 37,38. Das große Zahnrad 38 kämmt nun mit einem im Vergleich dazu kleinen Ritzel 39, das drehfest mit einer Antriebswelle 40 des Aktuators 4 verbunden ist. Insgesamt kann dadurch eine sehr effektive Übersetzung realisiert werden, sodass der Aktuator 4 mit einer vergleichsweise hohen Drehzahl betrieben werden kann, um bei kleiner Leistung hohe Stellkräfte am Stellglied 3 zu erzeugen.

Bei dem hier gezeigten Beispiel sind der Führungsgehäuseabschnitt 18 und der Trägergehäuseabschnitt 12 an einem Stellantriebsgehäuse 41 des Stellantriebs 1 integral ausgeformt.

Bei der in den Fig. 4 und 5 gezeigten Ausführungsform ist die Querabstützung 42 mit zumindest zwei bezüglich der Bewegungsrichtung 2 in Umfangsrichtung verteilt angeordneten Führungsstiften 43 realisiert, die hierzu den Teller 31 parallel zur Bewegungsrichtung 2 geführt am Führungsgehäuseabschnitt 18 abstützen. Im gezeigten Beispiel sind genau zwei Führungsstifte 43 vorgesehen, die einander diametral gegenüberliegend angeordnet sind. Es ist klar, dass auch mehr als zwei Führungsstifte 43 vorgesehen sein können. Im Beispiel sind die Führungsstifte 43 jeweils in einer Führungsbuchse 44 parallel zur Bewegungsrichtung 2 geführt verstellbar gelagert. Die Führungsbuchsen 44 sind dabei am Teller 31 fest angeordnet. An ihren von den Führungsbuchsen 44 entfernten Enden sind die Führungsstifte 43 jeweils in einer Stiftöffnung 45 gehalten und/oder geführt verstellbar angeordnet, die hierzu am Führungsgehäuseabschnitt 18 ausgebildet sind.

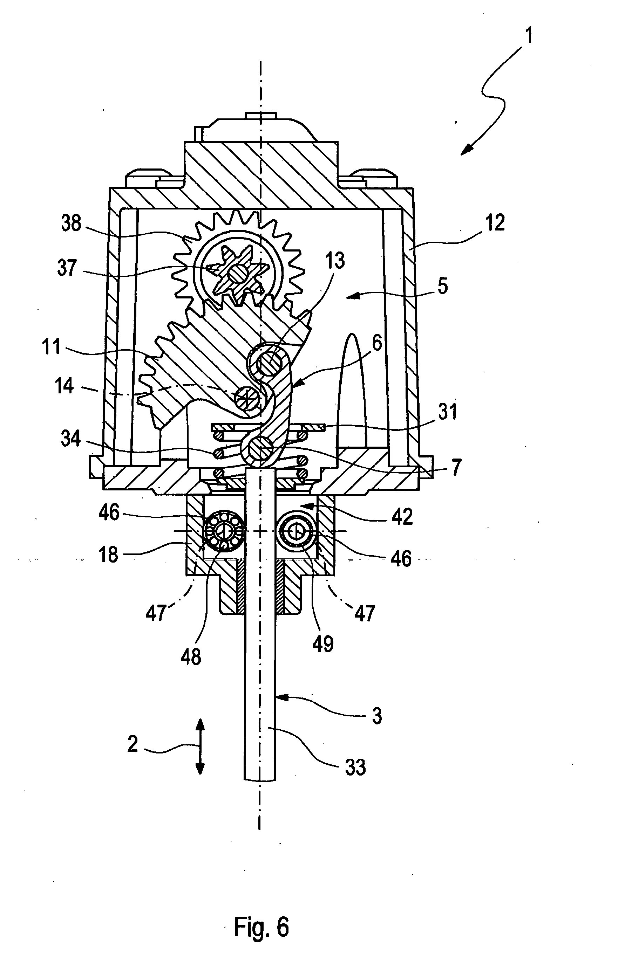

Bei der in Fig. 6 gezeigten Ausführungsform umfasst die Querabstützung 42 wenigstens ein Wälzkörperlager 46 oder Rollenlager 46. Das jeweilige Lager 46 ist dabei am Führungsgehäuseabschnitt 18 angeordnet ist und stützt sich unmittelbar am Stellglied 3 ab. Im Beispiel der Fig. 6 erfolgt die Querabstützung 42 distal und in der Darstellung unterhalb des ersten Kniehebelgelenks 7, also beabstandet zum Kniehebel 6. Ferner sind im Beispiel zumindest zwei Wälzkörperlager 46 bzw. Rollenlager 46 vorgesehen, die bezüglich der Bewegungsrichtung 2 in Umfangsrichtung verteilt angeordnet sind. Vorzugsweise handelt es sich um 2 oder 3 oder 4 Lager 46. Das jeweilige Wälzkörperlager 46 oder Rollenlager 46 weist eine Rotationsachse 47 auf. Um diese Rotationsachse 47 rotieren Wälzkörper 48 (Fig. 6 links) des Wälzkörperlagers 46, wenn sich das Stellglied 3 in seiner Bewegungsrichtung 2 bewegt. Alternativ rotiert um die Rotationsachse 47 eine Rolle 49 (Fig. 6 rechts) des Rollenlagers 46, wenn sich das Stellglied 3 in seiner Bewegungsrichtung 2 bewegt. Die jeweilige Rotationsachse 47 ist dabei quer zur Bewegungsrichtung 2 orientiert.

## Patentansprüche

1. Stellantrieb für ein bidirektional verstellbares Stellglied (3), insbesondere für eine Abgasrückführeinrichtung oder für einen Abgasturbolader,
- mit einem Aktuator (4) zum Erzeugen von Antriebskräften,
- mit einem Kniehebel (6), der über ein erstes Kniehebelgelenk (7) mit dem Stellglied (3) gelenkig verbunden ist,
- mit einer Kraftübertragungsanordnung (5), die den Aktuator (4) mit dem Kniehebel (6) zur Kraftübertragung verbindet,
- wobei ein ausgangsseitiges Ausgangselement (11) der Kraftübertragungsanordnung (5) an einem Trägergehäuseabschnitt (12) des Stellantriebs (1) schwenkbar gelagert ist,
- wobei der Kniehebel (6) über ein zweites Kniehebelgelenk (13) mit dem Ausgangselement (11) gelenkig verbunden ist,
**gekennzeichnet durch** eine Querabstützung (42), die den Kniehebel (6) und das Stellglied (3) in einer quer zur Bewegungsrichtung (2) des Stellglieds (3) orientierten Abstützrichtung (17) an einem Führungsgehäuseabschnitt (18) des Stellantriebs (1) abstützt.

2. Stellantrieb nach Anspruch 1,
**dadurch gekennzeichnet,**
- **dass** die Querabstützung (42) im Bereich des ersten Kniehebelgelenks (7) angeordnet ist, und/oder
- **dass** die Gelenkachsen (15,16) der beiden Kniehebelgelenke (7,13) und die Schwenkachse (14) des Ausgangselementes (11) parallel zueinander und senkrecht zur linearen Bewegungsrichtung (2) des Stellglieds (3) verlaufen, wobei die Abstützrichtung (17) senkrecht zur Bewegungsrichtung (2) und senkrecht zu den Gelenkachsen (15,16) verläuft.

3. Stellantrieb nach Anspruch 1 oder 2,
**dadurch gekennzeichnet,**
**dass** der Führungsgehäuseabschnitt (18) zumindest an einer Seite eines Verstellbereiches (19) des ersten Kniehebelgelenks (7) zwei parallel zur Bewegungsrichtung (2) des Stellglieds (3) verlaufende Führungsbahnabschnitte (20,21) aufweist, die voneinander einen Abstand (22) aufweisen und an denen ein Führungskörper (23) abgleitet oder abrollt, der bzgl. des ersten Kniehebelgelenks (7) ortsfest angeordnet ist.

4. Stellantrieb nach Anspruch 3,
**dadurch gekennzeichnet,**
- **dass** der jeweilige Führungskörper (23) als Wälzlager oder Rolle ausgestaltet ist und an zumindest einem Führungsbahnabschnitt (20,21) abrollt, wobei insbesondere vorgesehen sein kann, dass das jeweilige Wälzlager einen mit dem ersten Kniehebelgelenk (7) verbundenen Innenring (24), einen an zumindest einem Führungsbahnabschnitt (20,21) abrollenden Außenring (25) und zwischen Innenring (24) und Außenring (25) angeordnete Wälzkörper (26) aufweist, oder
- **dass** der Abstand (22) zwischen den beiden Führungsbahnabschnitten (20,21) größer ist als ein Außendurchmesser (29) des Führungskörpers (23), insbesondere der Rolle oder des Wälzlagers, vorzugsweise des Außenrings (25), oder
- **dass** sich der jeweilige Führungskörper (23) bei einer Druckkraftübertragung zwischen Kniehebel (6) und Stellglied (3) entlang des einen Führungsbahnabschnitts (20) abstützt und bei einer Zugkraftübertragung zwischen Kniehebel (6) und Stellglied (3) entlang des anderen Führungsbahnabschnitts (21) abstützt, oder
- **dass** die beiden Führungsbahnabschnitte (20,21) über einen Verbindungsbahnabschnitt (30) zu einer zusammenhängenden, U-förmigen Führungsbahn miteinander verbunden sind, wobei insbesondere vorgesehen sein kann, dass der jeweilige Führungskörper (23) in einem Wendepunkt oder Totpunkt der Verstellbewegung des Stellglieds (3) beim Übergang zwischen Druckkraftübertragung und Zugkraftübertragung entlang des Verbindungsbahnabschnitts (30) abgleitet oder abrollt und hinsichtlich der Abstützung von dem einen Führungsbahnabschnitt (20) zum anderen Führungsbahnabschnitt (21) wechselt, oder
- **dass** an zwei diametral gegenüberliegenden Seiten des Verstellbereichs (19) des ersten Kniehebelgelenks (7) je zwei Führungsbahnabschnitte (20,21) und je ein Führungskörper (23) vorgesehen sind.

5. Stellantrieb nach Anspruch 3 oder 4,
**dadurch gekennzeichnet,**
**dass** der Kniehebel (6) im ersten Kniehebelgelenk (7) über eine erste Gelenkwelle (27) mit dem Stellglied (3) gelenkig verbunden ist, wobei die erste Gelenkwelle (27) zumindest an einer Seite übersteht und den Führungskörper (23), insbesondere den Innenring (24), trägt.

6. Stellantrieb nach einem der Ansprüche 1 bis 5,
**dadurch gekennzeichnet,**
**dass** das Stellglied (3) im Bereich des ersten Kniehebelgelenks (7) mit einem Teller (31) fest verbunden ist.

7. Stellantrieb nach Anspruch 6,
**dadurch gekennzeichnet,**
- **dass** eine Rückstellfeder (34) vorgesehen ist, die einerseits am Teller (31) und andererseits am Führungsgehäuseabschnitt (18) abgestützt ist und die das Stellglied (3) in eine Ausgangsstellung antreibt, oder
- **dass** der Teller (31) integral an einem Stellgliedkopf (32) ausgeformt ist, an dem eine Stellgliedstange (33) befestigt ist, oder
- **dass** der Teller (31) ringförmig ausgestaltet ist und über zwei diametral gegenüberliegende Stege (35) mit dem Stellglied (3) oder einem Stellgliedkopf (32) des Stellglieds (3) verbunden ist, die am Führungsgehäuseabschnitt (18) in je einem Führungsspalt (36) seitlich geführt sind, oder
- **dass** das erste Kniehebelgelenk (7) am Stellgliedkopf (32) ausgebildet ist, oder
- **dass** die Stege (35) die Führungsspalte (36) durchgreifen, sodass das erste Kniehebelgelenk (7) innen am Führungsgehäuseabschnitt (18) angeordnet ist, während die Rückstellfeder (34) außen am Führungsgehäuseabschnitt (18) angeordnet ist, oder
- **dass** die Stege (35) parallel zur Abstützrichtung (17) orientiert sind.

8. Stellantrieb nach Anspruch 6 oder 7,
**dadurch gekennzeichnet,**
**dass** die Querabstützung (42) zumindest zwei bezüglich der Bewegungsrichtung (2) in Umfangsrichtung verteilt angeordnete Führungsstifte (43) aufweist, die den Teller (31) parallel zur Bewegungsrichtung (2) geführt am Führungsgehäuseabschnitt (18) abstützen.

9. Stellantrieb nach Anspruch 8,
**dadurch gekennzeichnet,**
- **dass** der jeweilige Führungsstift (43) in einer Führungsbuchse (44) parallel zur Bewegungsrichtung (2) geführt verstellbar ist, die am Teller (31) angeordnet ist, und/oder
- **dass** der jeweilige Führungsstift (43) am Führungsgehäuseabschnitt (18) in einer Stiftöffnung (45) gehalten und/oder geführt verstellbar ist.

10. Stellantrieb nach einem der Ansprüche 1 bis 9,
**dadurch gekennzeichnet,**
- **dass** der Aktuator (4) ein Elektromotor ist, und/oder
- **dass** die Kraftübertragungsanordnung (5) als Zahnradgetriebe ausgestaltet ist

11. Stellantrieb nach einem der Ansprüche 1 bis 10,
**dadurch gekennzeichnet,**
- **dass** das Ausgangselement (11) ein Verzahnungselement, insbesondere ein Zahnradsegment, ist, und/oder
- **dass** der Führungsgehäuseabschnitt (18) und der Trägergehäuseabschnitt (12) integral an einem Schnellantriebsgehäuse (41) ausgeformt sind.

12. Stellantrieb nach einem der Ansprüche 1 bis 11,
**dadurch gekennzeichnet,**
**dass** die Querabstützung (42) wenigstens ein Wälzkörperlager (46) oder Rollenlager (46) aufweist, das am Führungsgehäuseabschnitt (18) angeordnet ist und sich am Stellglied (3) abstützt.

13. Stellantrieb nach Anspruch 12,
**dadurch gekennzeichnet,**
- **dass** mehrere Wälzkörperlager (46) oder Rollenlager (46) bezüglich der Bewegungsrichtung (2) in Umfangsrichtung verteilt angeordnet sind, und/oder
- **dass** das jeweilige Wälzkörperlager (46) oder Rollenlager (46) eine Rotationsachse (47) aufweist, um welche Wälzkörper des Wälzkörperlagers (46) rotieren oder eine Rolle des Rollenlagers (46) rotiert und die quer zur Bewegungsrichtung (2) orientiert ist.

14. Abgasrückführventil für eine Abgasrückführeinrichtung einer Brennkraftmaschine, insbesondere in einem Kraftfahrzeug,
- mit einem Ventilglied (8) zum Steuern eines durchströmbaren Querschnitts, mit dem in Abhängigkeit seiner Hubverstellung eine Abgasrückführrate der Abgasrückführeinrichtung einstellbar ist,
- mit einem Stellantrieb (1) nach einem der Ansprüche 1 bis 13 zum Antreiben des Ventilglieds (8).

15. Abgasturbolader für eine Brennkraftmaschine, insbesondere in einem Kraftfahrzeug,
- mit einem Wastegate-Ventil, dessen Ventilglied zum Steuern eines eine Hochdruckseite mit einer Niederdruckseite einer Turbine des Abgasturboladers verbindenden Bypasses dient, wobei ein Stellantrieb (1) nach einem der Ansprüche 1 bis 13 zum Antreiben des Ventilglieds vorgesehen ist, oder
- mit einer Turbine, die eine mit einem Stellglied verstellbare variable Turbinengeometrie aufweist, wobei ein Stellantrieb (1) nach einem der Ansprüche 1 bis 13 zum Antreiben des Stellglieds vorgesehen ist.

## Claims

1. An actuating drive for a bidirectionally adjustable actuating element (3), in particular for an exhaust recirculating device or for an exhaust turbocharger,
- having an actuator (4) for producing drive forces,
- having a toggle lever (6), which is connected in an articulated manner to the actuating element (3) by means of a first toggle lever joint (7),
- having a force transmission arrangement (5), which connects the actuator (4) to the toggle lever (6) for the purpose of force transmission,
- wherein an output-side output element (11) of the force transmission arrangement (5) is mounted pivotably on a supporting housing section (12) of the actuating drive (1),
- wherein the toggle lever (6) is connected in an articulated manner to the output element (11) by means of a second toggle lever joint (13),
**characterised by** a transverse support (42), which supports the toggle lever (6) and the actuating element (3) on a guiding housing section (18) of the actuating drive (1) in a supporting direction (17) which is oriented transversely to the movement direction (2) of the actuating element (3).

2. The actuating drive according to Claim 1,
**characterised in**
- **that** the transverse support (42) is arranged in the region of the first toggle lever joint (7), and/or
- **that** the joint axes (15, 16) of the two toggle lever oints (7, 13) and the pivot axis (14) of the output element (11) run parallel to each other and perpendicularly to the linear movement direction (2) of the actuating element (3), wherein the supporting direction (17) runs perpendicularly to the movement direction (2) and perpendicularly to the joint axes (15, 16).

3. The actuating drive according to claim 1 or 2,
**characterised in that**
the guiding housing section (18) has at least on one side of an adjustment region (19) of the first toggle lever joint (7) two guiding track sections (20, 21) which run parallel to the movement direction (2) of the actuating element (3) and have a distance. (22) from each other and on which a guiding body (23) slides or rolls, which is arranged in a stationary manner in relation to the first toggle lever joint (7).

4. The actuating drive according to Claim 3,
**characterised in**
- **that** the respective guiding body (23) is formed as a rolling bearing or roller and rolls on at least one guiding track section (20, 21), wherein it can in particular be provided for the respective rolling bearing to have an inner ring (24) connected to the first toggle lever joint (7), an outer ring (25) which rolls on at least one guiding track section (20, 21) and rolling bodies (26) arranged between the inner ring (24) and the outer ring (25), or
- **that** the distance (22) between the two guiding track sections (20, 21) is greater than an outer diameter (29) of the guiding body (23), in particular of the roller or of the rolling bearing, preferably of the outer ring (25), or
- **that** the respective guiding body (23) is supported along one guiding track section (20) during transmission of compressive force between the toggle lever (6) and the actuating element (3) and is supported along the other guiding track section (21) during transmission of tensile force between the toggle lever (6) and the actuating element (3), or
- **that** the two guiding track sections (20, 21) are connected to each other by means of a connecting track section (30) to form a cohesive, U-shaped guiding track, wherein it can in particular be provided for the respective guiding body (23) to slide or roll along the connecting track section (30) at a turning point or dead point of the adjustment movement of the actuating element (3) during the transition between compressive force transmission and tensile force transmission and changes from one guiding track section (20) to the other guiding track section (21) in terms of support, or
- **that** two guiding track sections (20, 21) and one guiding body (23) are provided in each case on two diametrically opposite sides of the adjustment region (19) of the first toggle lever joint (7).

5. The actuating drive according to claim 3 or 4,
**characterised in that**
the toggle lever (6) in the first toggle lever joint (7) is connected in an articulated manner to the actuating element (3) by means of a first joint shaft (27), wherein the first joint shaft (27) projects at least on one side and bears the guiding body (23), in particular the inner ring (24).

6. The actuating drive according to one of Claims 1 to 5,
**characterised in that**
the actuating element (3) is connected fixedly to a plate (31) in the region of the first toggle lever joint (7).

7. The actuating drive according to Claim 6,
**characterised in**
- **that** a restoring spring (34) is provided, which is supported on the plate (31) on one side and on the guiding housing section (18) on the other side and which drives the actuating element (3) into an output position, or
- **that** the plate (31) is integrally formed on an actuating element head (32) to which an actuating element rod (33), or
- **that** the plate (31) is ring-shaped and connected to the actuating element (3) or an actuating element head (32) of the actuating element (3) by means of two diametrically opposite webs (35), which are each guided laterally in one guiding gap (36) on the guiding housing section (18), or
- **that** the first toggle lever joint (7) is formed on the actuating element head (32), or
- **that** the webs (35) engage through the guiding gaps (36), so that the first toggle lever joint (7) is arranged on the inside of the guiding housing section (18), while the restoring spring (34) is arranged on the outside of the guiding housing section (18), or
- **that** the webs (35) are oriented parallel to the supporting direction (17).

8. The actuating drive according to claim 6 or 7,
**characterised in that**
the transverse support (42) has at least two guiding pins (43) which are arranged in a distributed manner in the circumferential direction in relation to the movement direction (2) and support the plate (31) on the guiding housing section (18) in a guided manner parallel to the movement direction (2).

9. The actuating drive according to Claim 8,
**characterised in**
- **that** the respective guiding pin (43) can be adjusted in a guided manner parallel to the movement direction (2) in a guiding bushing (44) which is arranged on the plate (31), and/or
- **that** the respective guiding pin (43) is held and/or can be adjusted in a guided manner in a pin opening (45) on the guiding housing section (18).

10. The actuating drive according to one of Claims 1 to 9,
**characterised in**
- **that** the actuator (4) is an electric motor, and/or **characterised in that**
- that the force transmission arrangement (5) is configured as a gear system.

11. The actuating drive according to one of Claims 1 to 10,
**characterised in**
- **that** the output element (11) is a toothed element, in particular a gearwheel segment, and/or
- **that** the guiding housing section (18) and the supporting housing section (12) are integrally formed on a rapid drive housing (41).

12. The actuating drive according to one of Claims 1 to 11,
**characterised in that**
the transverse support (42) has at least one rolling body bearing (46) or roller bearing (46), which is arranged on the guiding housing section (18) and is supported on the actuating element (3).

13. The actuating drive according to Claim 12,
**characterised in**
- **that** a plurality of rolling body bearings (46) or roller bearings (46) are arranged in a distributed manner in the circumferential direction in relation to the movement direction (2), and/or
- **that** the respective rolling body bearing (46) or roller bearing (46) has a rotation axis (47) about which rolling bodies of the rolling body bearing (46) rotate or a roller of the roller bearing (46) rotates and which is oriented transversely to the movement direction (2).

14. An exhaust recirculating valve for an exhaust recirculating device of an internal combustion engine, in particular in a motor vehicle,
- having a valve element (8) for controlling a cross section through which flow can pass, with which an exhaust recirculation rate of the exhaust recirculating device can be set depending on the lift adjustment of said valve element,
- having an actuating drive (1) according to one of Claims 1 to 13 for driving the valve element (8).

15. An exhaust turbocharger for an internal combustion engine, in particular in a motor vehicle,
- having a wastegate valve, the valve element of which is used to control a bypass which connects a high-pressure side to a low-pressure side of a turbine of the exhaust turbocharger, wherein an actuating drive (1) according to one of Claims 1 to 13 is provided to drive the valve element, or
- having a turbine which has a variable turbine geometry which can be adjusted with an actuating element, wherein an actuating drive (1) according to one of Claims 1 to 13 is provided to drive the actuating element.

## Revendications

1. Mécanisme de commande pour un vérin (3) réglable dans les deux directions, en particulier pour un dispositif de recirculation des gaz d'échappement ou pour un turbocompresseur, comprenant
- un actionneur (4) de génération de forces motrices,
- une genouillère (6) qui est reliée de façon articulée, par une première articulation de genouillère (7), audit vérin (3),
- un ensemble de transmission de force (5) qui relie ledit actionneur (4) à ladite genouillère (6) pour la transmission de force,
- un élément de sortie (11) côté sortie dudit ensemble de transmission de force (5) étant logé à pivotement sur une portion de boîtier support (12) du mécanisme de commande (1),
- ladite genouillère (6) étant reliée de façon articulée, par une deuxième articulation de genouillère (13), audit élément de sortie (11),
**caractérisé par** un appui transversal (42) qui appuie ladite genouillère (6) et le vérin (3) sur une portion de boîtier de guidage (18) du mécanisme de commande (1) dans une direction d'appui (17) orientée transversalement à la direction de mouvement (2) du vérin (3).

2. Mécanisme de commande selon la revendication 1, **caractérisé par le fait**
- **que** ledit appui transversal (42) est disposé au niveau de ladite première articulation de genouillère (7) et/ou
- **que** les axes d'articulation (15, 16) des deux articulations de genouillère (7, 13) et l'axe de pivotement (14) dudit élément de sortie (11) s'étendent parallèlement les uns aux autres et perpendiculairement à la direction de mouvement (2) linéaire du vérin (3), la direction d'appui (17) s'étendant perpendiculairement à la direction de mouvement (2) et perpendiculairement aux axes d'articulation (15, 16).

3. Mécanisme de commande selon la revendication 1 ou 2, **caractérisé par le fait que** ladite portion de boîtier de guidage (18) présente, au moins sur un côté d'une zone de réglage (19) de ladite première articulation de genouillère (7), deux sections de glissière (20, 21) qui s'étendent parallèlement à la direction de mouvement (2) du vérin (3) et présentent une distance (22) l'une de l'autre et sur lesquelles glisse ou roule un corps de guidage (23) qui est disposé de manière fixe par rapport à ladite première articulation de genouillère (7).

4. Mécanisme de commande selon la revendication 3, **caractérisé par le fait**
- **que** ledit corps de guidage (23) respectif est réalisé en tant que palier à roulement ou rouleau et roule sur au moins une section de glissière (20, 21), dans lequel il peut être prévu en particulier que le palier à roulement respectif comprend une bague intérieure (24) reliée à la première articulation de genouillère (7), une bague extérieure (25) roulant sur au moins une section de glissière (20, 21) ainsi que des corps roulants (26) disposés entre lesdites bagues intérieure (24) et extérieure (25), ou
- **que** la distance (22) séparant les deux sections de glissière (20, 21) est supérieure à un diamètre extérieur (29) du corps de guidage (23), en particulier du rouleau ou du palier à roulement, de préférence de la bague extérieure (25), ou
- **que**, lors d'une transmission de force de pression entre la genouillère (6) et le vérin (3), le corps de guidage (23) respectif s'appuie le long de l'une des sections de glissière (20) et, lors d'une transmission de force de traction entre la genouillère (6) et le vérin (3), il s'appuie le long de l'autre section de glissière (21), ou
- **que** les deux sections de glissière (20, 21) sont reliées entre elles via une section de voie de liaison (30) pour former une glissière en U continue, dans lequel il peut être prévu en particulier que le corps de guidage (23) respectif, sur un point de retournement ou point mort du mouvement de réglage du vérin (3), lors de la transition entre la transmission de force de pression et la transmission de force de traction, glisse ou roule le long de ladite section de voie de liaison (30) et passe, en ce qui concerne l'appui, de l'une des sections de glissière (20) à l'autre section de glissière (21), ou
- **que** sur deux côtés diamétralement opposés de la zone de réglage (19) de la première articulation de genouillère (7) sont prévus respectivement deux sections de glissière (20, 21) et respectivement un corps de guidage (23).

5. Mécanisme de commande selon la revendication 3 ou 4, **caractérisé par le fait que** la genouillère (6) dans la première articulation de genouillère (7) est reliée de façon articulée par un premier arbre d'articulation (27) audit vérin (3), ledit premier arbre d'articulation (27) étant en saillie sur un côté au moins et portant ledit corps de guidage (23), en particulier la bague intérieure (24).

6. Mécanisme de commande selon l'une quelconque des revendications 1 à 5, **caractérisé par le fait que** le vérin (3) est solidaire, au niveau de la première articulation de genouillère (7), d'un plateau (31).

7. Mécanisme de commande selon la revendication 6, **caractérisé par le fait**
- **qu'**un ressort de rappel (34) est prévu qui est appuyé sur ledit plateau (31) d'un côté et sur ladite portion de boîtier de guidage (18) de l'autre côté et qui entraîne ledit vérin (3) dans une position initiale, ou
- **que** ledit plateau (31) est formé intégralement sur une tête de vérin (32) sur laquelle est fixée une tige de vérin (33), ou
- **que** ledit plateau (31) est réalisé en forme d'anneau et est relié au vérin (3) ou à une tête de vérin (32) du vérin (3) par le biais de deux entretoises (35) diamétralement opposées qui sont guidées latéralement sur ladite portion de boîtier de guidage (18) respectivement dans une fente de guidage (36), ou
- **que** ladite première articulation de genouillère (7) est réalisée sur la tête de vérin (32), ou
- **que** lesdites entretoises (35) traversent les fentes de guidage (36) de sorte que la première articulation de genouillère (7) est disposée sur la face intérieure de la portion de boîtier de guidage (18), tandis que le ressort de rappel (34) est disposé sur la face extérieure de la portion de boîtier de guidage (18), ou
- **que** lesdites entretoises (35) sont orientées parallèlement à la direction d'appui (17).

8. Mécanisme de commande selon la revendication 6 ou 7, **caractérisé par le fait que** l'appui transversal (42) présente au moins deux goupilles de guidage (43) qui sont disposées de manière à être réparties dans la direction circonférentielle relativement à la direction de mouvement (2) et qui appuient ledit plateau (31) sur la portion de boîtier de guidage (18) d'une manière guidée parallèlement à la direction de mouvement (2).

9. Mécanisme de commande selon la revendication 8, **caractérisé par le fait**
- **que** ladite goupille de guidage (43) respective est réglable en étant guidée dans une douille de guidage (44) parallèlement à la direction de mouvement (2), douille qui est disposée sur ledit plateau (31), et/ou
- **que** ladite goupille de guidage (43) respective est réglable sur la portion de boîtier de guidage (18) en étant maintenue et/ou guidée dans une ouverture de goupille (45).

10. Mécanisme de commande selon l'une quelconque des revendications 1 à 9, **caractérisé par le fait**
- **que** ledit actionneur (4) est un moteur électrique et/ou
- **que** ledit ensemble de transmission de force (5) est réalisé comme engrenage.

11. Mécanisme de commande selon l'une quelconque des revendications 1 à 10, **caractérisé par le fait**
- **que** ledit élément de sortie (11) est un élément d'engrenage, en particulier un segment de roue dentée, et/ou
- **que** ladite portion de boîtier de guidage (18) et ladite portion de boîtier support (12) sont formées intégralement sur un carter d'entraînement rapide (41).

12. Mécanisme de commande selon l'une quelconque des revendications 1 à 11, **caractérisé par le fait que** ledit appui transversal (42) présente au moins un palier à corps roulants (46) ou roulement à rouleaux (46) qui est disposé sur la portion de boîtier de guidage (18) et s'appuie sur le vérin (3).

13. Mécanisme de commande selon la revendication 12, **caractérisé par le fait**
- **que** plusieurs paliers à corps roulants (46) ou roulements à rouleaux (46) sont disposés de manière à être répartis dans la direction circonférentielle relativement à la direction de mouvement (2), et/ou
- **que** le palier à corps roulants (46) respectif ou roulement à rouleaux (46) respectif présente un axe de rotation (47) autour duquel des corps roulants du palier à corps roulants (46) tournent ou un rouleau du roulement à rouleaux (46) tourne et qui est orienté transversalement à la direction de mouvement (2).

14. Soupape de recirculation des gaz d'échappement pour un dispositif de recirculation des gaz d'échappement d'un moteur à combustion interne, en particulier dans un véhicule automobile, comprenant
- un élément de soupape (8) pour commander une section apte à être traversée, par le biais duquel, en fonction de son changement de la course, peut être réglé un taux de recirculation des gaz d'échappement du dispositif de recirculation des gaz d'échappement,
- un mécanisme de commande (1) selon l'une quelconque des revendications 1 à 13, pour commander ledit élément de soupape (8).

15. Turbocompresseur pour un moteur à combustion interne, en particulier dans un véhicule automobile, comprenant
- une soupape de décharge wastegate dont l'élément de soupape sert à commander un by-pass reliant un côté haute pression à un côté basse pression d'une turbine du turbocompresseur, un mécanisme de commande (1) selon l'une quelconque des revendications 1 à 13 étant prévu pour commander ledit élément de soupape, ou
- une turbine qui présente une géométrie de turbine variable réglable par un vérin, un mécanisme de commande (1) selon l'une quelconque des revendications 1 à 13 étant prévu pour commander le vérin.
